(19) Europäisches Patentamt
European Patent Office
Office européen des brevets

(11) **EP 2 587 572 B1**

(12) **EUROPEAN PATENT SPECIFICATION**

(45) Date of publication and mention
of the grant of the patent:
**24.05.2017 Bulletin 2017/21**

(51) Int Cl.:
*H01M 4/587* (2010.01)  *C01B 32/05* (2017.01)
*C01B 32/205* (2017.01)  *C10B 57/04* (2006.01)
*C10B 55/00* (2006.01)  *H01M 10/0525* (2010.01)

(21) Application number: **11798268.6**

(22) Date of filing: **24.06.2011**

(86) International application number:
**PCT/JP2011/064565**

(87) International publication number:
**WO 2011/162387 (29.12.2011 Gazette 2011/52)**

(54) **METHOD OF PRODUCING RAW MATERIAL CARBON COMPOSITION FOR LITHIUM ION SECONDARY BATTERY NEGATIVE ELECTRODE MATERIAL**

VERFAHREN ZUR HERSTELLUNG EINER ROHMATERIALKOHLENSTOFFZUSAMMENSETZUNG FÜR NEGATIVELEKTRODENMATERIAL FÜR LITHIUM-IONEN-SEKUNDÄRBATTERIE

PROCÉDÉ DE FABRICATION DE COMPOSITION DE DÉPART À BASE DE CHARBON POUR MATÉRIAU D'ÉLECTRODE NÉGATIVE DE BATTERIE SECONDAIRE AU LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2010 JP 2010145051**

(43) Date of publication of application:
**01.05.2013 Bulletin 2013/18**

(73) Proprietor: **JX Nippon Oil & Energy Corporation**
**Chiyoda-ku**
**Tokyo 100-8162 (JP)**

(72) Inventors:
• **TANO, Tamotsu**
**Kuga-gun**
**Yamaguchi 740-0061 (JP)**
• **OZAWA, Hiroshi**
**Kuga-gun**
**Yamaguchi 740-0061 (JP)**
• **OYAMA, Takashi**
**Kuga-gun**
**Yamaguchi 740-0061 (JP)**
• **HASHIZAKA, Hiromitsu**
**Kuga-gun**
**Yamaguchi 740-0061 (JP)**
• **SAKAMOTO, Akio**
**Tokyo 100-8162 (JP)**

(74) Representative: **Grünecker Patent- und**
**Rechtsanwälte**
**PartG mbB**
**Leopoldstraße 4**
**80802 München (DE)**

(56) References cited:
EP-A1- 2 381 516    EP-A1- 2 479 823
EP-A1- 2 579 368    WO-A1-2006/109497
WO-A1-2009/060891    JP-A- 2011 065 961

**Description**

Technical Field

The present invention relates to a method for producing a raw material carbon composition for a carbonaceous material for a negative electrode of a lithium-ion secondary battery.

Background Art

A lithium-ion secondary battery has lighter weight and more excellent input and output characteristics than a conventional secondary battery such as a nickel cadmium battery, a nickel hydrogen battery and a lead battery, and has therefore been considered promising in recent years as a power source for an electric vehicle or a hybrid vehicle. A carbonaceous material is used as an active material constituting an electrode of a lithium-ion secondary battery and has been extensively studied with the aim of increasing the performance of the lithium-ion secondary battery (refer to, for example, Patent documents 1 and 2).

The carbonaceous material used as a negative electrode material of a lithium-ion secondary battery is, in general, roughly classified into a graphite-based carbonaceous material and an amorphous carbonaceous material. The graphite-based carbonaceous material has an advantage of high energy density per unit volume compared with the amorphous carbonaceous material. For this reason, the graphite-based carbonaceous material is usually employed as a negative electrode material in a lithium-ion secondary battery for a cellular phone and a laptop computer which are compact but require large charge and discharge capacity. Graphite has a structure in which hexagonal network planes of carbon atoms have been stacked regularly, and during charging and discharging, intercalation or deintercalation of lithium ions takes place at the edges of the hexagonal network planes.

WO 2009/060891 discloses a raw coke composition for a negative electrode material obtained by subjecting a stock oil composition to a coking treatment. The stock oil composition comprises a blend of a first heavy oil and a second heavy oil, wherein the first heavy oil is obtained by hydrodesulfurization treatment and has a saturated component content of 40-85% by weight and the second heavy oil is obtained by fluidized catalytic cracking and has an aromatic index of at least 0.3. The content of the second heavy oil is preferebly 50-80 parts by weight with respect to 100 parts by weight of the stock oil composition.

Prior art documents

Patent documents

[Patent Document 1] Japanese Patent No. 3056519
[Patent Document 2] Japanese Patent Application Examined Publication (JP-B) No. 4-24831/1992

Summary of the invention

Problems to be solved by the Invention

Use of a graphite-based carbonaceous material as a negative electrode material of a lithium-ion secondary battery results in an increase in energy density per unit volume as described above. However, when such a carbonaceous material is used in a field of automobile such as a hybrid vehicle, there is room for improvement in high-speed charge and discharge characteristics, particularly high-speed charge characteristics. This problem is presumed to be caused mainly by high crystallinity of graphite-based carbonaceous material which limits the diffusion of lithium ions in the carbon layer when it is used for the negative electrode of the lithium-ion secondary battery.

With the foregoing in view, the invention has been made. An object of the invention is to provide a method of producing a raw material carbon composition for a negative electrode material of a lithium-ion secondary battery which is useful for achieving excellent high-speed charge and discharge characteristics of the lithium-ion secondary battery. Means for Solving the Problems

In order to produce a lithium-ion secondary battery having large charge and discharge capacity and excellent high-speed charge and discharge characteristics, it is necessary to use, as a negative electrode material, a carbonaceous material having a highly developed crystal structure and form diffusion paths of solvated lithium ions in such a manner that a large number of diffusion paths are arranged in the carbon layer. In other words, growth of a carbon layer plane and formation of a larger number of well-ordered edge planes of carbon are necessary.

The present inventors have investigated a carbonaceous material having an excellent crystal structure, while paying attention to the formation mechanism of the crystal structure. For example, needle coke is formed in the following manner: a heavy oil is treated at high temperature to cause thermal cracking and polymerization and/or condensation reaction and thereby form liquid crystal spherules called "mesophase"; and then, as a result of coalescence of these spherules, a large liquid crystal called "bulk mesophase" is formed as an intermediate product. The present inventors made an extensive investigation on the influence of a stock oil composition and a raw material carbon composition to be used for the preparation of a carbonaceous material on their crystal structure.

As a result of investigation, the inventors have found that in order to obtain a lithium-ion secondary battery capable of satisfying the above-mentioned required performance, it is effective to use a stock oil composition obtained by blending, at a predetermined ratio, a heavy oil capable of forming a good bulk mesophase and another heavy oil capable of forming a gas contributing to the formation of diffusion paths of lithium ions in the carbon layer when this bulk mesophase is carbonized and solidified by polymerization and/or condensation; and subjecting the resulting composition to coking treatment. The inventors have completed the following inventions based on such a finding.

The present invention provides a method for producing a raw material carbon composition for a carbonaceous material for a negative electrode of a lithium-ion secondary battery, comprising the steps of:

> a) blending a first stock oil having a density at 15°C of from 0.96 to 1.05 g/cm$^3$ and
> an aromatic carbon fraction (fa) of from 0.40 to 0.65 determined by the Knight method with a second stock oil having a saturated component of from 40 to 80% by weight measured by thin-layer chromatography and detected using a flame ionization detector, in such an amount that the ratio of the first stock oil to the sum of the first and second stock oil is 55 to 80% by volume, to obtain a stock oil composition, and
> b) subjecting the stock oil composition to a coking treatment,

characterized in that

the first stock oil is a bottom oil of residue fluid catalytic cracking (RFCC) apparatus and the second stock oil is a desulfurized and deasphalted oil, and

the stock oil composition has a 10% by volume distillation temperature of from 240 to 400°C measured according to " Petroleum Products - Distillation Test Method" in JIS K 2254. Also provided is a method for producing a carbonaceous material for a negative electrode for a lithium-ion secondary battery comprising the steps of:

> a) producing a raw material carbon composition according to claim 1, and
> b) subjecting the raw material carbon composition to a heat treatment.

**Effect of the Invention**

The raw material carbon composition produced according to the present invention is useful for realizing a lithium-ion secondary battery having excellent high-speed charge and discharge characteristics.

Embodiments for Carrying out the invention

The stock oil (1) has a density at 15°C of from 0.96 to 1.05 g/cm$^3$, more preferably from 0.96 to 1.04 g/cm$^3$. Densities less than 0.96 g/cm$^3$ markedly decrease the yield of coke prepared from the stock oil composition and are therefore industrially undesired. Densities exceeding 1.05 g/cm$^3$ cause rapid coking and tend to induce clogging of a tube in a heating furnace so that they are not preferred from the standpoint of operation.

In addition, densities outside the above-mentioned range are not preferred because there appears a timing gap among growth of mesophases, coalescence thereof, and gas generation from the stock oil (2), making it impossible to adequately orient the mesophases in a uniaxial direction. The random texture thus formed interferes with the diffusion paths of lithium ions.

The term "density" as used herein means a density as measured in accordance with JIS K2249 "Testing Methods For Density Of Crude Oil And Petroleum Products, Computation with density/weight/volume conversion tables".

The aromatic carbon fraction (fa) is determined by the Knight method. In the Knight method, the distribution of carbon is divided into three components ($A_1$, $A_2$, $A_3$) as the spectrum of aromatic carbon obtained by the $^{13}$C-NMR method. In these three components, $A_1$ corresponds to the number of carbons in an aromatic ring, substituted aromatic carbons, and one half of unsubstituted aromatic carbons (corresponding to the peaks of from about 40 to 60 ppm in $^{13}$C-NMR); $A_2$ corresponds to the other half of the unsubstituted aromatic carbons (corresponding to the peaks of from about 60 to 80 ppm in $^{13}$C-NMR); and $A_3$ corresponds to the number of aliphatic carbons (corresponding to the peaks of from about 130 to 190 ppm in $^{13}$C-NMR). Based on them, fa is determined by the following expression:

$$fa=(A_1+A_2)/(A_1+A_2+A_3).$$

According to the literature, "Characterization of Pitch II. Chemical Structure", Yokono and Sanada, (Tanso No. 105, p 73-81 (1981)), the $^{13}$C-NMR method is the best method for quantitatively determining fa which is the most basic amount among the chemical structure parameters of pitches.

The aromatic carbon fraction (fa) of the stock oil (1) is from 0.40 to 0.65, preferably from 0.45 to 0.60. This condition is important for forming a basic carbon skeleton which is indispensable for the formation and growth of good mesophases. The aromatic carbon fractions (fa) less than 0.40 markedly decrease the yield of coke obtained from the stock oil composition. The aromatic carbon fractions exceeding 0.65, on the other hand, drastically generate a number of mesophases in the matrix during the preparation procedure of coke. In this case, coalescence occurs earlier than single growth of mesophase spherules, which decreases or deforms the texture of coke, leading to the formation of coke having a texture called "mosaic". Even after carbonization and graphitization, carbon layer planes of such coke do not grow, leading to a marked increase in highly reactive edge planes. Using such a material for a negative electrode is not preferred because gas is generated due to a reaction between the electrolyte solution and edge planes of carbon.

Also using such a material for a negative electrode is not preferred because it limits the number of lithium ions incorporated in the carbon layer planes during charging, leading to a reduction in charge capacity.

The amount of the saturated component described herein is determined using the TLC-FID method. In the TLC-FID method, a sample is separated into four components, that is, a saturated component, an aromatic component, a resin component and an asphaltene component by using thin-layer chromatography (TLC) and each component is then detected using a flame ionization detector (FID). The amount of the saturated component is expressed by a percentage of the amount of the saturated component to the total amount of all the components determined using the TLC-FID method.

First, $0.2g \pm 0.01$ g of the sample is dissolved in 10 ml of toluene to prepare a sample solution. The lower end (the position of 0.5 cm for the rod holder) of a silica gel thin-layer rod (chromarod) baked beforehand is spotted with 1 µl of the solution by using a micro syringe, followed by drying with a dryer. Then, with ten chromarods as a set, the sample is developed using developing solvents. As the developing solvents, for example, hexane in a first development chamber, hexane/toluene (20:80 by volume) in a second development chamber, and dichloromethane/methanol (95:5 by volume) in a third development chamber are used. The saturated component is eluted and developed in the first development chamber using hexane as the solvent. The chromarods after development are loaded in Iatroscan to measure the amount of each component by using a flame ionization detector (FIG). Amounts of all the components are added to obtain the total amount of all the components.

The stock oil (2) has a saturated component, which is detectable by development using thin-layer chromatography, of from 40 to 80% by weight, preferably from 45 to 75% by weight. The saturated component within the above-mentioned range is effective for gas generation for orienting crystals to a uniaxial direction upon solidification of mesophases during the production procedure of coke.

The saturated component less than 40% by weight is not preferred because the mesophase cannot be oriented sufficiently in a uniaxial direction and the texture becomes random to interfere with the diffusion paths of lithium ions. The saturated component exceeding 80% by weight, on the other hand, generates too much gas from the saturated component, which tends to act to disturb the orientation of a bulk mesophase. In this case, planes of the carbon layers are not arranged well also in the carbonization and/or graphitization procedure, making it impossible to incorporate many lithium ions at the time of charging. This leads to a decrease in the charge capacity. Such excessive contents are therefore not preferred.

The stock oil composition is obtained by blending two stock oils while satisfying the above-mentioned conditions.

The stock oil (1) is a bottom oil of residue fluid catalytic cracking (RFCC) apparatus. The residue fluid catalytic cracking (RFCC) apparatus and the fluid catalytic cracking (FCC) apparatus differ largely because the former uses a residual oil (e.g. atmospheric residue) as a stock oil, while the latter uses a vacuum gas oil as a stock oil, but both of them are fluidized-bed fluid catalytic cracking apparatus which selectively causes a cracking reaction by using a catalyst to obtain high-octane FCC gasoline. Examples of the bottom oil of residue fluid catalytic cracking (RFCC) apparatus include bottom oils produced by changing the weight ratio of a catalyst to a residual oil such as an atmospheric residue within the range of from 6 to 8 at a reactor outlet temperature (ROT) of from 510 to 540°C.

The stock oil (2) is a desulfurized and deasphalted oil. The desulfurized and deasphalted oil is obtained, for example, by treating an oil such as a vacuum distillation residue with solvent deasphalting apparatus using propane, butane, or pentane or a mixture thereof as a solvent to remove the asphalt content from the oil, and desulfurizing the deasphalted oil (DAO) thus obtained to the sulfur content of preferably from 0.05 to 0.40% by weight.

When a stock oil composition is prepared by blending these stock oils (1) and (2), the blending ratio of the stock oil (1) to the total amount of the stock oil (1) and the stock oil (2) is adjusted as needed to fall within a range of from 55 to 80% by volume, depending on the properties of the stock oils used.

The properties of the stock oils vary depending on the kind of a crude oil, treatment conditions until the stock oil is obtained from the crude oil so that those satisfying the above-mentioned conditions may be selected as needed.

The term "10% by volume distillation temperature" means a temperature measured according to "Petroleum Products-Distillation Test Method" specified in JIS K 2254.

The stock oil composition according to the invention has a 10% by volume distillation temperature, which is one of distillation properties, of from 240 to 400°C, more preferably from 250 to 380°C in distilled form. A carbonaceous material prepared from the stock oil composition having a 10% by volume distillation temperature of less than 240°C cannot incorporate lithium ions sufficiently during charging so that the charge capacity tends to be insufficient. Small-molecular-weight components contained in a fraction having a distillation temperature less than 240°C are presumed to become coke rich in isotropic components called "Non-Mesogen" which does not become a mesophase during a coking process and which adversely affects the arrangement of carbon layer planes during the carbonization and graphitization procedure.

When the distillation temperature exceeds 400°C, on the other hand, coke with mosaic texture is prepared because of large content of a fraction in which coking advances in an early stage. Carbon layer planes of such coke do not grow even after carbonization and/or graphitization so that highly reactive edge planes show a marked increase. Using such a material for a negative electrode is not preferred because gas is generated due to the reaction between the electrolyte solution and edge planes of carbon.

Such temperatures are not preferred because many lithium ions cannot be incorporated into the carbon layer planes during charging, which leads to a decrease in the charge capacity.

The raw material carbon composition is obtained by coking the specified stock oil composition. Then, if necessary, the composition is heat-treated and then, converted into artificial graphite. The graphite thus obtained is used as a carbonaceous material for a negative electrode of a lithium-ion secondary battery. Although the coking process for obtaining the raw material carbon composition satisfying the predetermined conditions is not particularly limited, a delayed coking process is preferred. More specifically, the predetermined stock oil composition is heat-treated using a delayed coker under pressure to obtain raw coke. The delayed coker is used preferably under the following conditions: a pressure of from 400 to 800 kPa and a temperature of from 420 to 550°C. Although no particular limitation is imposed on the carbonization and graphitization conditions, the raw coke is calcined at from 1000 to 1500°C in a rotary kiln, or a shaft furnace to obtain calcined coke, and then the calcined coke is subjected to graphitization treatment at from 2200 to 2850°C in an Acheson furnace.

When the raw material carbon composition is used, a carbonaceous material for a negative electrode of a lithium-ion secondary battery particularly suited for high-speed charging and discharging can be prepared.

Next, a method of producing a negative electrode of a lithium-ion secondary battery by using the carbonaceous material obtained from the raw material carbon composition, and the lithium-ion secondary battery will be explained.

The method of producing a negative electrode of a lithium-ion secondary battery includes, but not particularly limited to, pressure molding of a mixture comprising the carbonaceous material according to the invention, a binder, an optional conductive aid, and an optional organic solvent. Alternatively, a negative electrode for a lithium-ion secondary battery may be prepared by kneading the carbonaceous material, a binder, or a conductive aid in an organic solvent to obtain a slurry, applying the slurry on a collector, and then drying.

Examples of the binder include polyvinylidene fluoride, polytetrafluoroethylene, and SBR (styrene-butadiene rubber). The amount of the binder is adequately from 1 to 30% by weight, preferably from about 3 to 20% by weight, based on 100% by weight of the carbonaceous material.

Examples of the conductive aid include carbon black, graphite, acetylene black, indium-tin oxide exhibiting conductivity, and conductive polymers such as polyaniline, polythiophene and polyphenylenevinylene. The amount of the conductive aid is preferably from 1 to 15% by weight based on 100% by weight of the carbonaceous material.

Examples of the organic solvent include dimethylformamide, N-methylpyrrolidone, isopropanol and toluene.

The carbonaceous material, a binder, an optional conductive aid and an optional organic solvent may be mixed using known apparatus such as a screw-type kneader, a ribbon mixer, a universal mixer, or a planetary mixer. The mixture thus obtained is then formed or molded by rolling or pressing. The pressure upon rolling or pressing is preferably from about 100 to 300 MPa.

The material and shape of the collector are not particularly limited. For example, a collector obtained by forming aluminum, copper, nickel, titanium, or stainless steel material into a foil, perforated foil, or mesh in band form may be used. A porous material such as a porous metal (metal foam) or carbon paper may also be used as the collector.

Examples of the method of applying the negative electrode material slurry to the collector include, but not particularly limited to, known methods such as metal mask printing, electrostatic coating, dip coating, spray coating, roll coating, doctor blading, gravure coating, and screen printing. After application, rolling treatment with a flat press, or calender roll is optionally conducted.

Also, integration of the collector with the slurry obtained in the form of a sheet, or pellets may be carried out in a known manner by using, for example, a roll, a press, or a combination thereof.

A lithium-ion secondary battery can be obtained, for example, by placing the negative electrode for the lithium-ion secondary battery formed in the manner described above and a positive electrode so as to face them to each other via a separator, and pouring an electrolyte solution.

An active material to be used for the positive electrode is not particularly limited. For example, a metal compound, metal oxide, metal sulfide or a conductive polymer material capable of doping or intercalating lithium ions may be used. Examples include lithium cobaltate ($LiCoO_2$), lithium nickelate ($LiNiO_2$), lithium manganate ($LiMnO_2$), complex oxides of them ($LiCo_XNi_YMn_ZO_2$ wherein X+Y+Z=1), lithium manganese spinel ($LiMn_2O_4$), lithium vanadium compounds, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivine-type $LiMPO_4$ (M:Co, Ni, Mn, Fe), conductive polymers such as polyacetylene, polyaniline, polypyrrole, polythiophene and polyacene, porous carbon, and mixtures of these materials.

As the separator, for example, nonwoven fabric, cloth, or microporous film mainly comprising a polyolefin such as polyethylene or polypropylene, and combinations thereof may be used. It is not necessary to use a separator when a positive electrode and a negative electrode are not in direct contact with each other in a lithium-ion secondary battery to be fabricated.

As the electrolyte solution and electrolyte used in the lithium secondary battery, a known organic electrolyte solution, a known inorganic solid electrolyte, or a known polymer solid electrolyte can be used. The organic electrolyte solution is preferable from the viewpoint of electrical conductivity.

Examples of the organic electrolyte solution include an organic solvent, for example, ether such as dibutyl ether, ethylene glycol monomethyl ether, ethylene glycol monoethyl ether, ethylene glycol monobutyl ether, diethylene glycol monomethyl ether, and ethylene glycol phenyl ether; amide such as N-methylformamide, N,N-dimethylformamide, N-ethylformamide, N,N-diethylformamide, N-methylacetamide, N,N-dimethylacetamide, N-ethylacetamide, and N,N-diethylacetamide; a sulfur-containing compound such as dimethyl sulfoxide and sulfolane; dialkyl ketone such as methyl ethyl ketone and methyl isobutyl ketone; cyclic ether such as tetrahydrofuran and 2-methoxytetrahydrofuran; carbonate such as ethylene carbonate, butylene carbonate, diethyl carbonate, dimethyl carbonate, methyl ethyl carbonate, propylene carbonate, and vinylene carbonate; γ-butyrolactone; N-methylpyrrolidone; acetonitrile; and nitromethane. Of these, ethylene carbonate, butylene carbonate, diethyl carbonate, dimethyl carbonate, methyl ethyl carbonate, propylene carbonate, vinylene carbonate, γ-butyrolactone, diethoxyethane, dimethyl sulfoxide, acetonitrile, and tetrahydrofuran are preferred, with a carbonate-based nonaqueous solvent such as ethylene carbonate and propylene carbonate being particularly preferred. The solvent may be used singly or in combination of two or more solvents.

As a solute (electrolyte) of the solvent, a lithium salt may be used. Examples of the lithium salt include $LiClO_4$, $LiBF_4$, $LiPF_6$, $LiAlCl_4$, $LiSbF_6$, $LiSCN$, $LiCl$, $LiCF_3SO_3$, $LiCF_3CO_2$ and $LiN(CF_3SO_2)_2$.

Examples of the polymer solid electrolyte include a polyethylene oxide derivative and a polymer containing the derivative, a polypropylene oxide derivative and a polymers containing the derivative, a phosphoric acid ester polymer, and a polycarbonate derivative and a polymer containing the derivative.

There is absolutely no limitation on the selection of members which are other than those described above but necessary for constituting the battery.

The structure of a lithium-ion secondary battery comprising, as the negative electrode material thereof, the carbonaceous material is not particularly limited. It is usually the common practice to wind a positive electrode, a negative electrode and an optional separator in a flat spiral manner to form a wound polar plate group, or stack them in a flat plate form to form a stacked polar plate group; and then enclose the polar plate group in an outer casing. A lithium-ion secondary battery is used, for example, as a paper cell, a button cell, a coin cell, a stacked cell, or a cylindrical cell.

The lithium-ion secondary battery comprising the negative electrode comprising the carbonaceous material is superior in high-speed charge and discharge characteristics to a lithium-ion secondary battery comprising the conventional carbonaceous material, and can be used, for example, in an automobile, more specifically, a hybrid vehicle, a plug-in hybrid vehicle, or an electric vehicle.

Examples

The invention will hereinafter be described based on Examples and Comparative Examples. However, it should not be construed that the invention is limited to or by the following Examples.

<Examples 1 to 7 and Examples 8 to 10 (Reference) >

In Examples 1 to 10, the stock oil (1) was a bottom oil of residue fluid catalytic cracking (RFCC) apparatus. More specifically, the stock oil (1) was the bottom oil prepared by changing the weight ratio of a catalyst to the atmospheric residue derived from the southern crude oil, which was used as a raw material, within the range of from 6 to 8 at a reactor outlet temperature (ROT) of from 510 to 540°C.

In Examples 1 to 7, the stock oil (2) was a desulfurized and deasphalted oil obtained by treating a vacuum distillation residual oil derived from the Middle Eastern crude oil in a solvent deasphalter to remove the asphalt content and then desulfurizing the deasphalted oil (DAO). More specifically, the stock oil (2) was the desulfurized and deasphalted oil obtained by using propane, butane, pentane, or a mixture thereof as a solvent for the solvent deasphalter to obtain a deasphalted oil having sulfur content of from 3.0 to 5.0% by weight, and subjecting the resulting deasphalted oil to a reactor average temperature ranging from 350 to 390°C for desulfurization to sulfur content of from 0.05 to 0.40% by weight. In Examples 1 to 6, the desulfurized and deasphalted oil had a saturated component of 77% by weight, while in Example 7, the desulfurized deasphalted oil had a saturated component of 65% by weight.

In Examples 8 to 10 (Reference examples not falling within the scope of the invention), the stock oil (2) was a bottom oil of vacuum distillation apparatus having sulfur content of from 0.10 to 0.30% by weight obtained by subjecting the southern crude oil, which was used as a raw material, to a heating-furnace outlet temperature ranging from 320 to 360°C under reduced pressure of from 10 to 30 Torr.

The stock oil compositions of Examples 1 to 4 were prepared by blending 55% by volume of the stock oil (1) with 45% by volume of the stock oil (2). The stock oil compositions of Examples 5 to 7 were prepared by blending 70% by volume of the stock oil (1) with 30% by volume of the stock oil (2). The stock oil compositions of Examples 8 to 10 were prepared by blending 80% by volume of the stock oil (1) with 20% by volume of the stock oil (2).

Table 1 shows, with regard to the stock oil compositions used in Examples, density at 15°C and aromatic carbon fraction (fa) of the stock oil (1), wt% (% by weight) of a saturated component obtained by development of the stock oil (2) by thin-layer chromatography, and vol% (% by volume) of the stock oil (1) in the total volume of the stock oils (1) and (2). In thin-layer chromatography, "IATROSCAN MK-5", trade name; product of Dia-latron (current Mitsubishi Kagaku latron, Inc.) was used.

The stock oil compositions thus obtained were then subjected to delayed coking at 540°C under pressure of 400 kPa to produce raw material carbon compositions (raw coke).

<Comparative Examples 1 to 16>

In Comparative Examples 1 to 8, the stock oil (1) was a bottom oil of fluid catalytic cracking (FCC) apparatus and prepared by changing the weight ratio of catalyst to oil within the range of 6 to 9 at a reactor outlet temperature (ROT) of from 500 to 520°C. The stock oil (2) was the desulfurized and deasphalted oil which was the same as in Example 1. The stock oil composition was prepared by blending 55% by volume of the stock oil (1) with 45% by volume of the stock oil (2).

In Comparative Examples 9 and 10, the stock oil (1) was a bottom oil of residue fluid catalytic cracking (RFCC) apparatus which was the same as in Example 2. The stock oil (2) was a vacuum residue of Middle Eastern crude oil. The stock oil composition was prepared by blending 55% by volume of the stock oil (1) with 45% by volume of the stock oil (2).

In Comparative Examples 11 and 12, the stock oil (1) was a bottom oil of residue fluid catalytic cracking (RFCC) apparatus which was the same as in Example 2. The stock oil (2) was an atmospheric residue of Middle Eastern crude oil. The stock oil composition was prepared by blending 55% by volume of the stock oil (1) and 45% by volume of the stock oil (2).

In Comparative Examples 13 to 16, the stock oils (1) and (2) were the same as in Example 6. The stock oil compositions were prepared by changing a blending ratio of the stock oil (1) and the stock oil (2).

Table 2 shows, with regard to the stock oil compositions used in Comparative Examples, density at 15°C and aromatic carbon fraction (fa) of the stock oil (1), wt% (% by weight) of a saturated component obtained by development of the stock oil (2) by thin-layer chromatography, and vol% (% by volume) of the stock oil (1) in the total volume of the stock oils (1) and (2). In thin-layer chromatography, "IATROSCAN MK-5" (trade name) product of Dia-latron (current Mitsubishi Kagaku latron, Inc.) was used.

The stock oil compositions thus obtained were then subjected to delayed coking at 540°C under pressure of 400 kPa to produce raw material carbon compositions (raw coke).

(1) Preparation of negative electrode material

The raw material carbon compositions (raw coke) obtained in Examples 1 to 10 and Comparative Examples 1 to 16 were calcined at 1000°C for one hour to obtain calcined coke. The calcined coke thus obtained was subjected to graphitization treatment at 2400°C for 5 minutes to obtain carbonaceous materials for negative electrodes of lithium-ion secondary batteries.

(2) Evaluation of charging and discharging of negative electrode materials (a) Formation of negative electrode

A slurry was prepared by mixing fine particles of the carbonaceous material for a negative electrode of a lithium-ion secondary battery as an active substance, acetylene black (AB) as a conductive material, and polyvinylidene fluoride (PVDF) as a binder at a weight ratio of 80:10:10 in N-methyl-2-pyrrolidone. The resulting slurry was applied onto a copper foil, dried on a hot plate for 10 minutes, and pressed using a roll press.

(b) Fabrication of a battery to be evaluated

A battery was fabricated using the above-mentioned composition (30 x 50 mm) as a negative electrode, lithium nickelate (30 x 50 mm) as a positive electrode, a mix solution of ethylene carbonate (EC) and methyl ethyl carbonate (MEC) having a weight ratio of EC/MEC=3/7 and solute: $LiPF_6$ (1M volume molar concentration) as an electrolyte solution, and a polyethylene microporous film as a separator.

(c) Evaluation of high-speed charge and discharge rate characteristics

The measurement results of high-speed charge and discharge characteristics of the batteries thus fabricated are shown in Tables 1 and 2. This evaluation was made at 10C rate.
The utilization (%) was determined by dividing the charge and discharge capacity at 10C by the charge and discharge capacity at 1C.
As shown in Tables 1 and 2, the lithium-ion secondary batteries comprising, as the negative electrodes, the carbonaceous materials prepared from the raw material carbon compositions obtained in Examples 1 to 10 were superior in both the charge and discharge capacity and the utilization under high-speed charge and discharge conditions (10C) to those comprising,as the negative electrode, the carbonaceous materials prepared from the stock oil compositions obtained in Comparative Examples 1 to 16.

[Table 1]

|  | stock oil (1) | | stock oil (2) | stock oil (1) in | battery performance (10C) | | | |
|  | density (g/cm³) | fa | saturated component (wt%) | stock oil composition (vol%) | charge capacity (mAh) | utilization (%) | discharge capacity (mAh) | utilization (%) |
|---|---|---|---|---|---|---|---|---|
| Example 1 | 0.97 | 0.41 | 77 | 55 | 15.1 | 77.3 | 15.3 | 83.5 |
| Example 2 | 1.01 | 0.53 | 77 | 55 | 15.2 | 80.2 | 15.8 | 83.5 |
| Example 3 | 1.04 | 0.64 | 77 | 55 | 14.7 | 79.7 | 15.1 | 82.4 |
| Example 4 | 1.01 | 0.61 | 77 | 55 | 14.7 | 76.9 | 15.2 | 82.6 |
| Example 5 | 0.97 | 0.41 | 77 | 70 | 15.0 | 78.4 | 15.3 | 81.7 |
| Example 6 | 1.01 | 0.53 | 77 | 70 | 15.2 | 80.7 | 15.4 | 80.3 |
| Example 7 | 1.01 | 0.53 | 65 | 70 | 15.5 | 82.9 | 15.9 | 83.2 |
| Example 8 | 0.97 | 0.41 | 40 | 80 | 15.3 | 82.1 | 15.7 | 82.7 |
| Example 9 | 1.01 | 0.53 | 40 | 80 | 15.4 | 81.4 | 15.6 | 79.4 |
| Example10 | 1.04 | 0.64 | 40 | 80 | 15.2 | 76.9 | 15.8 | 79.7 |

Examples 8 to 10 are reference examples.

[Table 2]

| | stock oil (1) | | stock oil (2) | stock oil (1) in | battery performance (10C) | | | |
| --- | --- | --- | --- | --- | --- | --- | --- | --- |
| | density (g/cm$^3$) | fa | saturated component (wt%) | stock oil composition (vol%) | charge capacity (mAh) | utilization (%) | discharge capacity (mAh) | utilization (%) |
| Comp. Ex. 1 | 0.95 | 0.42 | 77 | 55 | 12.5 | 74.9 | 12.5 | 77.1 |
| Comp. Ex. 2 | 0.92 | 0.42 | 77 | 55 | 12.1 | 74.1 | 12.4 | 78.6 |
| Comp. Ex. 3 | 1.06 | 0.63 | 77 | 55 | 11.7 | 75.7 | 12.1 | 70.2 |
| Comp. Ex. 4 | 1.08 | 0.63 | 77 | 55 | 8.5 | 50.3 | 7.7 | 46.6 |
| Comp. Ex. 5 | 1.01 | 0.38 | 77 | 55 | 12.5 | 76.2 | 12.3 | 75.2 |
| Comp. Ex. 6 | 0.97 | 0.34 | 77 | 55 | 9.1 | 62.1 | 7.9 | 66.3 |
| Comp. Ex. 7 | 1.05 | 0.67 | 77 | 55 | 8.6 | 55.7 | 7.8 | 51.7 |
| Comp. Ex. 8 | 1.05 | 0.71 | 77 | 55 | 6.6 | 49.3 | 6.7 | 44.3 |
| Comp. Ex. 9 | 1.01 | 0.53 | 37 | 55 | 12.5 | 77.9 | 12.3 | 80.1 |
| Comp. Ex.10 | 1.01 | 0.53 | 33 | 55 | 11.7 | 74.4 | 12.1 | 79.6 |
| Comp. Ex.11 | 1.01 | 0.53 | 83 | 55 | 12.5 | 75.7 | 12.5 | 70.2 |
| Comp. Ex.12 | 1.01 | 0.53 | 86 | 55 | 12.1 | 73.7 | 12.4 | 73.1 |
| Comp. Ex.13 | 1.01 | 0.53 | 40 | 52 | 11.7 | 75.2 | 12.1 | 78.1 |
| Comp. Ex.14 | 1.01 | 0.53 | 40 | 47 | 8.5 | 52.1 | 7.7 | 58.6 |
| Comp. Ex.15 | 1.01 | 0.53 | 40 | 83 | 12.1 | 77.7 | 12.4 | 76.2 |
| Comp. Ex.16 | 1.01 | 0.53 | 40 | 88 | 11.7 | 69.3 | 12.1 | 76.6 |

**Claims**

1. A method for producing a raw material carbon composition for a carbonaceous material for a negative electrode of a lithium-ion secondary battery, comprising the steps of:

   a) blending a first stock oil having a density at 15°C of from 0.96 to 1.05 g/cm$^3$ and an aromatic carbon fraction fa of from 0.40 to 0.65 determined by the Knight method with a second stock oil having a saturated component of from 40 to 80% by weight measured by thin-layer chromatography and detected using a flame ionization detector, in such an amount that the ratio of the first stock oil to the sum of the first and second stock oil is 55 to 80% by volume, to obtain a stock oil composition, and

b) subjecting the stock oil composition to a coking treatment,

**characterized in that** the first stock oil is a bottom oil of residue fluid catalytic cracking apparatus and the second stock oil is a desulfurized and deasphalted oil, and
the stock oil composition has a 10% by volume distillation temperature of from 240 to 400°C measured according to "Petroleum Products - Distillation Test Method" in JIS K 2254.

2. A method for producing a carbonaceous material for a negative electrode for a lithium-ion secondary battery comprising the steps of:

a) producing a raw material carbon composition according to claim 1, and
b) subjecting the raw material carbon composition to a heat treatment.


**Patentansprüche**

1. Verfahren zum Herstellen einer Rohmaterialkohlenstoffzusammensetzung für ein kohlenstoffhaltiges Material für eine negative Elektrode einer Lithium-Ionen-Sekundärbatterie, umfassend die Schritte:

a) Mischen eines ersten Ausgangsmaterialöls mit einer Dichte bei 15°C von 0,96 bis 1,05 g/cm$^3$ und einer aromatischen Kohlenstofffraktion fa von 0,40 bis 0,65, bestimmt durch das Knight-Verfahren, mit einem zweiten Ausgangsmaterialöl, das eine gesättigte Komponente von 40 bis 80 Gew.-% aufweist, gemessen durch Dünnschichtchromatographie und nachgewiesen unter Verwendung eines Flammenionisationsdetektors, in einer solchen Menge, dass das Verhältnis des ersten Ausgangsmaterialöls zu der Summe des ersten und zweiten Ausgangsmaterialöls 55 bis 80 Vol.-% beträgt, um eine Ausgangsmaterialölzusammensetzung zu erhalten, und
b) Unterwerfen der Ausgangsmaterialölzusammensetzung einer Verkokungsbehandlung,

**dadurch gekennzeichnet, dass**
das erste Ausgangsmaterialöl ein Sumpföl einer katalytischen Rückstands-Fließbettkrackapparatur ist und das zweite Ausgangsmaterialöl ein entschwefeltes und entasphaltiertes Öl ist, und
die Ausgangsmaterialölzusammensetzung eine 10 Vol.-%-Destillationstemperatur von 240 bis 400°C, gemessen gemäß "Petroleum Products - Distillation Test Method" in JIS K 2254, aufweist.

2. Verfahren zum Herstellen eines kohlenstoffhaltigen Materials für eine negative Elektrode für eine Lithium-Ionen-Sekundärbatterie, umfassend die Schritte:

a) Herstellen einer Rohmaterialkohlenstoffzusammensetzung gemäß Anspruch 1, und
b) Unterwerfen der Rohmaterialkohlenstoffzusammensetzung einer Wärmebehandlung.


**Revendications**

1. Procédé de production d'une composition de carbone de départ pour un matériau carboné pour une électrode négative d'une batterie au lithium-ion rechargeable, comprenant les étapes consistant à :

a) mélanger une première huile de base ayant une masse volumique à 15 °C de 0,96 à 1,05 g/cm$^3$ et une fraction de carbones aromatiques fa de 0,40 à 0,65 déterminée par la méthode de Knight avec une deuxième huile de base ayant un constituant saturé pour 40 à 80 % en poids mesuré par chromatographie sur couche mince et détecté au moyen d'un détecteur à ionisation de flamme, dans une quantité telle que le rapport entre la première huile de base et la somme de la première et la deuxième huile de base soit de 55 à 80 % en volume, pour obtenir une composition d'huile de base, et
b) soumettre la composition d'huile de base à un traitement de cokéfaction,

**caractérisé en ce que**
la première huile de base est une huile de queue d'un appareil de craquage catalytique fluide de résidu et la deuxième huile de base est une huile désulfurée et désasphaltée, et
la composition d'huile de base a une température de distillation de 10 % en volume de 240 à 400 °C mesurée selon « Petroleum Products - Distillation Test Method » dans JIS K 2254.

2. Procédé de production d'un matériau carboné pour une électrode négative pour une batterie au lithium-ion rechargeable comprenant les étapes consistant à :

   a) produire une composition de carbone de départ selon la revendication 1, et
   b) soumettre la composition de carbone de départ à un traitement thermique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009060891 A
- JP 3056519 B
- JP 4424831 B

**Non-patent literature cited in the description**

- **YOKONO ; SANADA.** *Characterization of Pitch II. Chemical Structure,* 1981, 73-81